(19) Europäisches Patentamt
European Patent Office
Office européen des brevets

(11) **EP 4 730 106 A1**

(12) **EUROPÄISCHE PATENTANMELDUNG**

(43) Veröffentlichungstag:
**22.04.2026 Patentblatt 2026/17**

(21) Anmeldenummer: **24207521.6**

(22) Anmeldetag: **18.10.2024**

(51) Internationale Patentklassifikation (IPC):
**G06F 8/41** *(2018.01)* **G06N 3/04** *(2023.01)*
**G06N 3/10** *(2006.01)*

(52) Gemeinsame Patentklassifikation (CPC):
**G06F 8/441; G06N 3/045; G06N 3/048;**
**G06N 3/063; G06N 3/10;** G06N 3/04

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Robert Bosch GmbH**
**70442 Stuttgart (DE)**

(72) Erfinder:
• **Hjort, Ulrik**
**21113 Malmö (SE)**

• **Vo, Duy Khoi**
**70469 Stuttgart (DE)**
• **Wagner, Benjamin**
**88045 Friedrichshafen (DE)**
• **Boblest, Sebastian**
**73105 Duernau (DE)**
• **Sulaiman, Leif**
**22477 Lund (SE)**
• **Lochmann, Markus**
**72762 Reutlingen (DE)**

Bemerkungen:
Geänderte Patentansprüche gemäss Regel 137(2) EPÜ.

(54) **VERFAHREN UND VORRICHTUNG ZUR CODE-GENERIERUNG FÜR EINEN PROGRAMMCODE ZUR BERECHNUNG EINES KÜNSTLICHEN NEURONALEN NETZES IN EINER HARDWAREUMGEBUNG**

(57) Die Erfindung betrifft ein computer-implementiertes Verfahren zum Durchführen einer Speicherplanung für eine Code-Generierung zur Bestimmung eines Codes für die Berechnung eines neuronalen Netzes zum Einsatz in einer Hardwareumgebung (2), mit folgenden Schritten:
- Bereitstellen (S1) von aufeinanderfolgenden Berechnungsschritten des neuronalen Netzes, wobei für jeden Berechnungsschritt die Größe mindestens eines Eingangsdatenblocks (EB1, EB2, EB3, EB4) und mindestens eines Ausgangsdatenblocks (AB1, AB2, AB3, AB4) bestimmt ist,
- Ermitteln (S2) eines maximalen Überlappungsbereich zwischen einem Eingangsdatenblock (EB1, EB2, EB3, EB4) und einem Ausgangsdatenblock (AB1, AB2, AB3, AB4) für jeden Berechnungsschritt;
- Durchführen (S3) einer Speicherplanung, in der der Speicherbereich des jeweiligen Eingangsdatenblocks (EB1, EB2, EB3, EB4) und Ausgangsdatenblocks (AB1, AB2, AB3, AB4) im Arbeitsspeicher festgelegt wird, abhängig von dem maximalen Überlappungsbereich für jeden Berechnungsschritt.

Fig. 3

**Beschreibung**

Technisches Gebiet

Die Erfindung betrifft die Implementierung eines Programmcodes auf einer Hardwareumgebung, wie sie beispielsweise als mikrocontrollergesteuerte Steuergeräte und dergleichen vorkommt. Die Erfindung betrifft weiterhin Verfahren zur Speicherplanung zum Handling von Eingangsdaten, Ausgangsdaten und Netzparametern.

Technischer Hintergrund

Bestimmte Hardwareumgebungen, wie beispielsweise Mikrocontroller in Steuergeräten, erfordern die Erstellung eines angepassten ausführbaren Programmcodes, um die Eigenheiten und Beschränkungen der bestimmten Hardwareumgebung zu berücksichtigen. So können insbesondere die verfügbare Speichergröße des Arbeitsspeichers, auf die der Mikrocontroller direkt zugreifen kann, beschränkt sein oder Speicherverschiebe- oder -kopieroperationen von einem Flash- oder externen Speicher auf den Arbeitsspeicher hardwarebedingt besonders aufwendig sein.

Die Berechnungsschritte für die Berechnung von Schichten von neuronalen Netzen können einen erheblichen Speicherbedarf benötigen, da für jede Berechnungsschicht mindestens ein Eingangsdatenblock und mindestens ein Ausgangsdatenblock abrufbar und von dem Mikrocontroller nutzbar in dem Arbeitsspeicher gespeichert werden muss.

Bestehende Code-Generatoren legen während der Speicherplanung fest, in welchem Bereich des Arbeitsspeichers die pro Berechnungsschicht benötigten Datenblöcke im Speicher abgelegt werden. Während der Speicherplanung wird neben der Zuordnung der Eingangsdatenblöcke und Ausgangsdatenblöcke zu Speicherbereichen auch den Daten, die während der Berechnung in einer Berechnungsschicht entstehen, ein entsprechender Speicherbereich zugewiesen.

Herkömmliche Code-Generatoren für neuronale Netze gehen häufig nicht von einem beschränkten Datenspeicher aus und nutzen in der Regel komplett separate Speicherblöcke zum Bereitstellen von Eingangsdatenblöcken und Ausgangsdatenblöcken für jede der aufeinanderfolgenden berechneten Berechnungsschichten.

Es ist Aufgabe der vorliegenden Erfindung, ein verbessertes Speichermanagement für die Berechnung von künstlichen neuronalen Netzen zur Verfügung zu stellen, bei der der gesamt benötigte Speicherplatz des Arbeitsspeichers reduziert werden kann.

Offenbarung der Erfindung

Diese Aufgabe wird durch das Verfahren zum Durchführen einer Speicherplanung für eine Code-Generierung eines Codes für die Berechnung eines neuronalen Netzes gemäß Anspruch 1 sowie durch die Vorrichtung gemäß dem nebengeordneten Anspruch gelöst.

Weitere Ausgestaltungen sind in den abhängigen Ansprüchen angegeben.

Gemäß einem ersten Aspekt ist ein computer-implementiertes Verfahren zum Durchführen einer Speicherplanung für eine Code-Generierung zur Bestimmung eines Codes für die Berechnung eines neuronalen Netzes vorgesehen, mit folgenden Schritten:

- Bereitstellen von aufeinanderfolgenden Berechnungsschritten des neuronalen Netzes, wobei für jeden Berechnungsschritt die Größe eines oder mehrerer Eingangsdatenblöcke und eines oder mehrerer Ausgangsdatenblöcke bestimmt ist,
- Ermitteln eines maximalen Überlappungsbereich zwischen jeweils einem Eingangsdatenblock und jeweils einem Ausgangsdatenblock für jeden Berechnungsschritt;
- Durchführen einer Speicherplanung, in der der Speicherbereich des jeweiligen Eingangsdatenblocks und Ausgangsdatenblocks im Arbeitsspeicher festgelegt wird, abhängig von dem maximalen Überlappungsbereich für jeden Berechnungsschritt.

Die einzelnen Berechnungsschritte zur Berechnung von Berechnungsschichten eines neuronalen Netzes werden in der Regel auf einer Hardwareumgebung seriell berechnet. Das bedeutet, dass der generierte Code für die Hardwareumgebung eine Reihenfolge festlegt, in der die Eingangsdaten verarbeitet und die Ausgangsdaten der jeweiligen Berechnungsschicht erzeugt werden. Die Eingangsdaten für einen Berechnungsschritt liegen in der Regel in Form von aufeinanderfolgend gespeicherten Datenelementen (Bytes, Worte) vor. Weiterhin werden in Folge der seriellen Verarbeitung Eingangsdaten in der Reihenfolge, in der diese in einem Speicherbereich gespeichert sind, verarbeitet. Dadurch kann der Fall auftreten, dass je nach Art des Berechnungsschritts bei der Berechnung einer entsprechenden Berechnungsschicht des neuronalen Netzwerks die Datenelemente der Eingangsdaten, die zu Beginn der Berechnung verwendet werden, im weiteren Verlauf der Berechnung nicht weiter genutzt oder abgerufen werden.

Dies tritt beispielsweise bei Berechnungsschritten, wie der Berechnung einer Convolution-Schicht, Dephtwise-Convolutions, Pooling-Operationen und Berechnungsschritten mit elementweise ausgeführten Operationen auf.

Das obige Verfahren sieht für eine Speicherplanung einer Code-Generierung vor, die einen Eingangsdatenblock und einen Ausgangsdatenblock in überlappenden Speicherbereichen vorzusehen, so dass bei einer aufeinanderfolgenden elementweisen Bearbeitung der Eingangsdaten der Datenblock der jeweils generierten Datenelemente der Ausgangsdaten einen Teil des Speicherbereichs des Eingangsdatenblocks überdeckt.

Das Überschreiben erfolgt jedoch nur so, dass keine noch für Rechenoperationen des jeweiligen Berechnungsschritts verwendeten Datenelemente überschrieben werden, sondern lediglich solche, die bereits für die Berechnung der Operation und des Berechnungsschritts verwendet worden sind und nicht mehr verwendet werden. Dadurch kann der Speicherbedarf für einen Berechnungsschritt zur Berechnung einer Berechnungsschicht eines neuronalen Netzes, der eine elementweise Verarbeitung von Eingangsdaten vorsieht, erheblich reduziert werden.

In welchem Maße der Eingangsdatenblock der Eingangsdaten und der Ausgangsdatenblock der Ausgangsdaten sich überlappen können, hängt vom Speicherzugriffsmuster des Berechnungsschritts ab. Beispielsweise bestimmt bei einem Convolution-Berechnungsschritt, bei der eine Convolution-Schicht berechnet wird, die Größe des effektiven Kernels, sowie ein ggf. vorhandener Zwischenspeicher, das Maß der Überlappung des Eingangsdatenblockes und des Ausgangsdatenblockes.

Die Größe des effektiven Kernels ergibt sich aus der eigentlichen Kernelgröße und einer eventuellen Dilation. Andere Berechnungsschritte können (einen der) den Eingangsdatenblock sofort vollständig überschreiben, z. B. bei einem Berechnungsschritt, der eine elementweise Addition zweier oder mehrerer Eingangsdatenblöcke vorsieht.

Der Vorteil des obigen Verfahrens besteht darin, dass sich der benötigte Speicherplatz zur Berechnung eines neuronalen Netzwerks enorm verringern kann.

Die Berechnung für die Speicherplanung beginnt mit einer Liste von Speicherdatenblöcken, die je nach anstehenden Berechnungsschritten in einem entsprechenden Speicherbereich des Arbeitsspeichers zwischengespeichert werden sollen. Jedem dieser Speicherdatenblöcke ist eine Liste von Attributen zugewiesen, die z. B. die Lebensdauer des Speicherdatenblocks angeben und welcher Operation dieser zugeordnet ist.

Für die Code-Generierung ermittelt die Speicherplanung durch Iteration über die Berechnungsschritte für jeden Berechnungsschritt, in welchem Speicherbereich ein Speicherdatenblock für die Eingangsdaten und die Ausgangsdaten gespeichert werden soll. Herkömmlich wird dabei beachtet, dass alle Speicherbereiche für die Datenblöcke distinkt sein müssen, so dass keine Überschneidung zwischen den Speicherbereichen während deren Lebensdauern auftreten.

Die Größe der möglichen Überlappung zwischen dem Speicherbereich für den Eingangsdatenblock und dem Speicherbereich für den Ausgangsdatenblock wird Überlappungsbereich genannt und hängt von der Art des Berechnungsschritts ab oder von der zu berechnenden Schicht des neuronalen Netzes. Abhängig von dem Berechnungsschritt können verschiedene Arten verwendet werden, die Überlappung der Speicherbereiche zu ermitteln.

Der Überlappungsbereich entspricht dem Bereich, mit dem ein Ende (größte Adresse) des Speicherbereichs des Ausgangsdatenblocks den Anfang (kleinste Adresse) des Speicherbereichs des Eingangsdatenblocks überlappen kann. Dabei wird davon ausgegangen, dass die Speicherbereiche im Wesentlichen mit im Wesentlichen aufsteigenden Adressen von einer Anfangsadresse des Speicherbereichs zu einer Endadresse als Endadresse des Speicherbereichs ausgelesen oder beschrieben werden.

Für elementweise Operationen, beispielsweise Additionen, Multiplikationen und Subtraktionen von Elementen mit gleichem Index aus zwei Eingangsdatenblöcken kann eine vollständige Überlappung des Speicherbereichs für den Ausgangsdatenblock mit dem Speicherbereich eines der Eingangsdatenblöcke vorgesehen werden, da das Ergebnis der Verknüpfung das entsprechend für die berechnete Operation verwendete Eingangsdatenelement überschreiben kann.

Ähnlich wie die elementweise Operation berechnet ein Berechnungsschritt zur Anwendung einer Aktivierungsfunktion, wie z. B. ReLU (nicht für SoftMax), ein Datenelement des Ausgangsdatenblocks für jedes Datenelement eines Eingangsdatenblocks. Damit kann wie bei dem elementweise Berechnungsschritt der Speicherbereich, der für den Ausgangsdatenblock vorgesehen wird, den Speicherbereich für den Eingangsdatenblock vollständig überlappen.

Berechnungsschritte für eine Convolution-Schicht oder Pooling-Schicht weisen ein komplexeres Speicherzugriffsmuster auf. Zum einen wird aus mehreren Datenelementen des Eingangsdatenblockes ein Datenelement des Ausgangsdatenblockes berechnet, zum anderen machen Padding und Stride die Beziehung zwischen dem Speicherbereich des Eingangsdatenblocks und dem Speicherbereich des Ausgangsdatenblocks komplizierter. Außerdem hängt das Maß der maximalen Überlappung in diesen Fällen von der konkreten Implementierung der Netzwerkschicht ab und ist daher nur ableitbar, wenn diese bekannt ist. Beide Arten von Berechnungsschritten Convolution und Pooling berechnen aus einem Schiebefenster, das sich über dem Eingangsdatenblock bewegt, das jeweilige Datenelement für den Ausgangsdatenblock. Maßgebend für die Größe der maximalen Überlappung der Speicherbereiche ist der maximale Abstand zwischen dem Datenelement des Ausgangsdatenblockes und dem ersten benötigten Datenelement des Eingangsdatenblockes.

Die diesbezügliche Berechnungsvorschrift basiert allgemein darauf, dass der Speicher in Zeilen und Spalten organisiert ist und ein Speicherbereich einen zusammenhängenden Adressbereich von aufeinander folgenden Adressen aufweist ist. Grundsätzlich wird ein Speicherbereich eines Eingangsdatenblocks ausgehend von der niedrigwertigsten Adresse zur höchstwertigen Adresse des Speicherbereichs bearbeitet. Seien x und y die Adresskoordinaten des Datenelement des Eingangsdatenblocks, wobei X der Spaltenadresse und y der Zeilenadresse entspricht. Es werden weiterhin $stride_x$ und $stride_y$ der Stride der Operation in x- und y-Richtung angenommen, $pad_x$ und $pad_y$ entsprechen dem Padding der Operation in x- und y-Richtung, ReLU die rectified-linear-unit-Funktion, sowie $input_x$ , $input_y$ und $input_{ch}$ die Breite, Höhe und Anzahl der Kanäle der Eingangsdaten. Dann kann für alle Operationen vom Typ Convolution und Pooling, die das oben beschriebene Zugriffsmuster aufweisen, der Index des ersten benötigten Datenelements im Speicher nach folgender Formel berechnet werden

$$\text{input\_element}(x, y) = (ReLU(stride_y*y-pad_y)*input_x + ReLU(stride_x*x-pad_x))*input_{ch}$$

Wenn man mit output, , $output_y$ und $output_{ch}$ die Breite, Höhe und Anzahl der Kanäle der Ausgangsdaten bezeichnet, ergibt sich der Index des Outputelements im Speicher als

$$\text{output\_element}(x, y) = (y * output_x + x) * output_{ch}.$$

Um die größtmögliche Überlappung aus diesen Formeln zu berechnen, wird zusätzlich noch eine Information über die konkrete Implementierung der Berechnungsschritte benötigt.

In vielen Implementierungen werden die Eingangsdaten, die zur Berechnung eines Outputelements benötigt werden, zuerst in einem zusammenhängenden Speicherbereich gesammelt. Da diese dann bereits gelesen wurden, können sie ggf. überschrieben werden, falls für sie kein späteres Outputelement mehr benötigt wird. Als zusätzlichen Optimierungsschritt werden oft nicht nur die Daten für ein Outputelement vorab gesammelt, sondern für eine bestimmte, implementierungsabhängige Anzahl von Outputelementen. Dies erhöht die maximal mögliche Überlappung.

Ohne ein Vorsammlung von Daten berechnet sich die größtmögliche Überlappung als

$$\text{max\_overlap} = max (\text{output\_element}(x, y) - \text{input\_element}(x, y)) \text{ mit } 0 \le x < output_x, 0 \le y < output_y$$

Mit Vorsammlung erhöht er sich entsprechend um die entsprechende Anzahl an zwischengespeicherten Elementen.

Die maximale Überlappung max_overlap gibt nun die Verschiebung an, mit der ein Endbereich des Speicherbereichs des Ausgangsdatenblocks den Anfangsbereich des Speicherbereichs (höchste Adresse) des Eingangsdatenblocks maximal überlappen dürfen. Die Ermittlung der maximalen Überlappung bestimmt sich aus dem Maximum aller Abstände zwischen der Speicheradresse des resultierenden Datenelements des Ausgangsdatenblocks bezogen auf das für die betreffende Berechnung zuerst zugegriffene Datenelement des Eingangsdatenblocks (kleinste Adresse) für alle Datenelemente.

Durch die Ermittlung der maximalen Überlappung max_overlap wird ermöglicht, dass bei der Speicherplanung für eine Code-Generierung ein größerer Freiheitsgrad bei der Platzierung des Speicherbereichs für den Ausgangsdatenblock verwendet werden.

Kurzbeschreibung der Zeichnungen

Bevorzugte Ausführungsformen werden nachfolgend anhand der beigefügten Zeichnungen näher erläutert. Es zeigen:

Figur 1    eine schematische Darstellung eines Speicherplans für die Berechnung eines neuronalen Netzes in mehreren Berechnungsschritten ohne überlappende Speicherbereiche;

Figur 2    eine schematische Darstellung einer Plattform zur Code-Generierung und Implementierung in einer Hardwareumgebung;

Figur 3    ein Flussdiagramm zur Veranschaulichung eines Verfahrens zur Speicherplanung im Rahmen einer Code-Generierung für die Berechnung eines neuronalen Netzes in einer Hardwareumgebung mit begrenztem Speicherplatz; und

Figur 4    eine entsprechende Darstellung der Anordnung von Speicherbereichen für Eingangsdatenblöcke und Ausgangsdatenblöcke bei einer Möglichkeit, dass Speicherbereiche für die Datenblöcke sich überlappen.

Beschreibung von Ausführungsformen

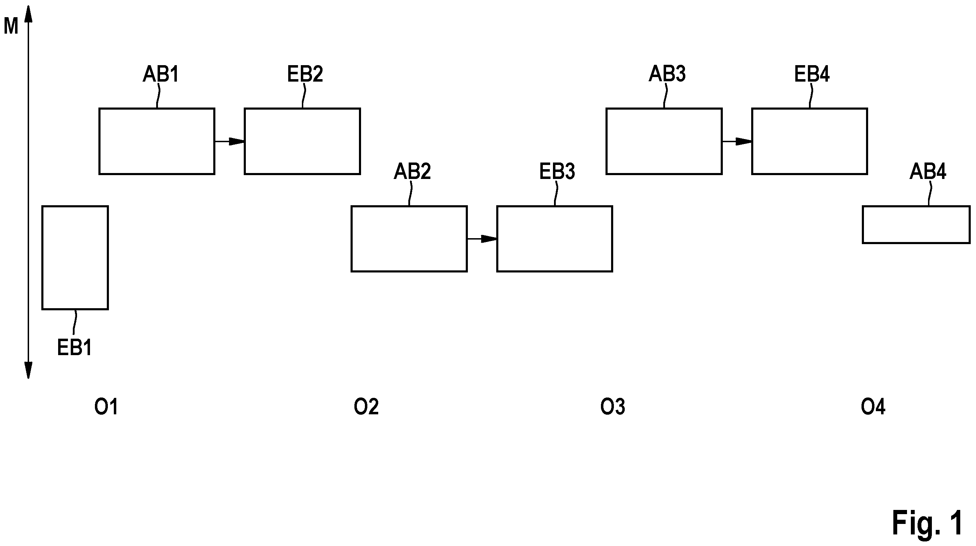

Im Rahmen der Code-Generierung ist eine Speicherplanung erforderlich, die für jeden Berechnungsschritt eines neuronalen Netzes einen Speicherbereich für einen oder mehrere Eingangsdatenblöcke und einen Speicherbereich für einen oder mehrere Ausgangsdatenblöcke für deren jeweilige Lebensdauer vorgibt. Dabei wird herkömmlich eine Speicherplanung durchgeführt, die lediglich vorsieht, einen Speicherbereich für einen Eingangsdatenblock und einen Ausgangsdatenblock freizugeben, wenn deren Lebensdauer abgelaufen ist. Die Lebensdauer wird dabei stets bis zum Ende des Berechnungsschrittes oder der darauffolgenden Berechnungsschritte angegeben. Die Platzierung der Speicherabschnitte einer herkömmlichen Speicherplanung ist in Figur 1 schematisch dargestellt, man erkennt Eingangsdatenblöcke EB1, EB2, EB3, EB4 für verschiedene Berechnungsschritte O1, O2, O3, O4 und die resultierenden Ausgangsdatenblöcke AB1, AB2, AB3, AB4.

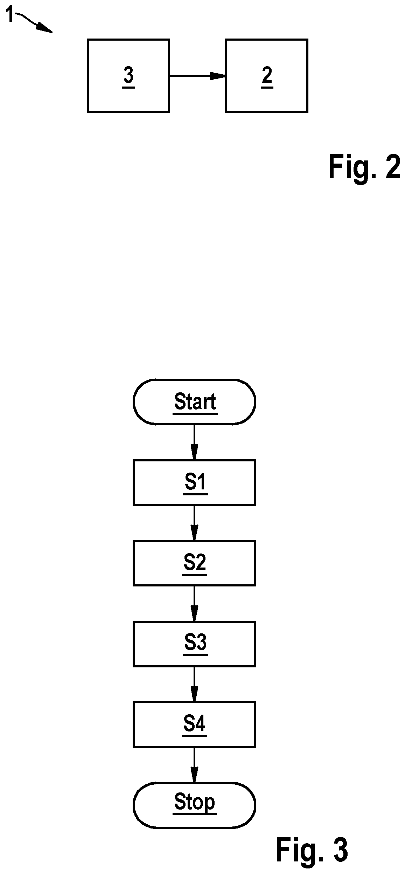

Figur 2 zeigt ein Blockdiagramm einer Plattform 1 zur Durchführung einer Code-Generierung und Implementieren eines generierten Programmcodes in einer Hardwareumgebung 2. Die Code-Generierung erfolgt auf einem herkömmlichen Computer 3 oder Workstation unter Vorgabe der Konfiguration eines neuronalen Netzes. Der Computer 3 ist eingerichtet, eine Speicherplanung und eine Code-Generierung durchzuführen, wobei die Speicherplanung zunächst für die einzelnen Berechnungsschritte des neuronalen Netzes eine Platzierung von Speicherbereichen zur Aufnahme mindestens eines Eingangsdatenblockes, und mindestens eines Ausgangsdatenblockes und mindestens eines Modellparameterblocks durchführt. Der Modellparameterblock umfasst alle Modellparameter, die für die Berechnung des jeweiligen Berechnungsschrittes benötigt werden, z.B. Gewichtungen, Bias-Werte einer Fully-Connected-Schicht.

Ist der Code generiert, wird dieser an die Hardwareumgebung 2 übertragen und dort implementiert bzw. ausgeführt.

Im Rahmen des nachfolgend beschriebenen Verfahrens kann nun vorgesehen sein, den Speicherbereich für einen Ausgangsdatenblock eines Berechnungsschritts zumindest teilweise überlappend zu dem Speicherbereich eines Eingangsdatenblocks für den Berechnungsschritt vorzusehen. Dadurch kann in erheblichem Maße Speicherplatz eingespart werden, da die Speicherbereiche für den Eingangsdatenblock und den Ausgangsdatenblock nicht vollständig nicht überlappend vorgesehen werden müssen.

Die Speicherplanung erfolgt in der Regel iterativ in Form eines Optimierungsverfahrens und kann zum Ziel haben, den Speicherplatz insgesamt zu reduzieren, die Kopieroperationen und Verschiebeoperationen von Speicherbereichen zu minimieren und dergleichen.

Durch das nachfolgend in Verbindung mit dem Flussdiagramm der Figur 3 beschriebene Verfahren ist es möglich, für bestimmte Arten von Berechnungsschritten Überlappungsbereiche zwischen dem Speicherbereich für den Eingangsdatenblock und den Ausgangsdatenblock vorzusehen, so dass die Freiheitsgrade bei der Speicherplanung erhöht sind. Dazu wird für jeden Berechnungsschritt ein maximaler Überlappungsbereich vorgegeben.

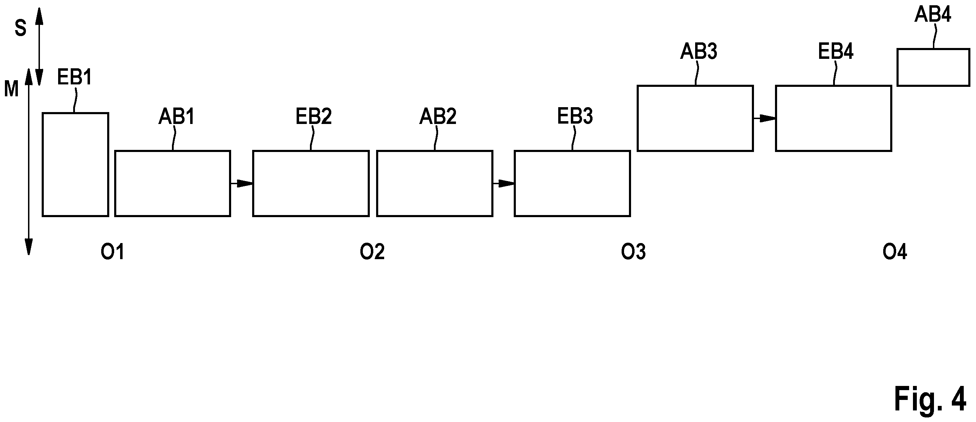

In Figur 4 ist beispielsweise für die mehreren Berechnungsschritte eines neuronalen Netzes der Figur 1 dargestellt, wie die Speicherbereiche für die Eingangsdatenblöcke EB1, EB2, EB3, EB4 und Ausgangsdatenblöcke AB1, AB2, AB3, AB4 angeordnet werden können, wenn diese sich zumindest teilweise überlappen dürfen. Man erkennt, dass signifikant weniger Speicherbedarf an Arbeitsspeicher M besteht und dass der gesamte Speicherplatz des insgesamt benötigten Arbeitsspeichers M um einen eingesparten Anteil S reduziert werden kann.

Figur 3 zeigt anhand eines Flussdiagramms den Ablauf des Verfahrens zur Speicherplanung. Bei der Speicherplanung ist grundsätzlich vorgesehen, für jeden Berechnungsschritt dessen Eingangsdatenblock entweder initial in den Speicherraum des Arbeitsspeichers M geladen wird oder dessen Speicherbereich sich aus einem vorangegangenen Berechnungsschritt als Ausgangsdatenblock ergibt, zu definieren, in welchem Speicherbereich des Arbeitsspeichers ein resultierender Ausgangsdatenblock AB1, AB2, AB3, AB4 gespeichert werden darf/soll. Dazu ist es notwendig, neben den ungenutzten Speicherbereichen auch den maximalen Überlappungsbereich zu definieren oder zu ermitteln, mit dem ein Speicherbereich des Ausgangsdatenblocks AB1, AB2, AB3, AB4 den Speicherbereich des für den jeweiligen Berechnungsschritt verwendeten Eingangsdatenblock EB1, EB2, EB3, EB4 maximal überlappen darf. Dadurch wird der verfügbare Speicherbereich, der für das Speichern des jeweiligen Ausgangsdatenblocks AB1, AB2, AB3, AB4 genutzt werden darf, vergrößert.

In Schritt S1 wird zunächst das zu implementierende neuronale Netz in Form einer Abfolge von Berechnungsschritten vorgegeben. Die Berechnungsschritte können allgemein die für neuronale Netze üblichen Funktionen umfassen, wie z.B. Convolutional-Schicht, Fully-Connected-Schicht, Pooling-Schicht, Konkatenationsschicht und dergleichen.

In Schritt S2 wird für jeden Berechnungsschritt ermittelt, wie groß der maximale Überlappungsbereich zwischen Eingangsdatenblock EB1, EB2, EB3, EB4 und Ausgangsdatenblock AB1, AB2, AB3, AB4 sein darf.

Handelt es sich bei dem Berechnungsschritt um eine elementweise Operation, bei der zwei oder mehrere gleichdimensionierte Abschnitte des Eingangsdatenblocks EB1, EB2, EB3, EB4 oder zwei oder mehrere Eingangsdatenblöcke EB1, EB2, EB3, EB4 miteinander elementweise verknüpft werden, so kann das Ergebnis der elementweisen Operation des Berechnungsschritts den Speicherplatz des Datenelements eines der Abschnitte des Eingangsdatenblocks EB1, EB2, EB3, EB4 oder einen der Eingangsdatenblöcke EB1, EB2, EB3, EB4 direkt überschreiben, da das entsprechende Datenelement nicht für nachfolgende Operationen genutzt wird. Der maximale Überlappungsbereich entspricht dann der Größe des Abschnitts des Eingangsdatenblocks EB1, EB2, EB3, EB4 oder eines der Eingangsdatenblöcke EB1, EB2, EB3, EB4. Somit kann der Speicherbereich des Ausgangsdatenblocks vollständig einen der Abschnitte des Eingangsdatenblockes EB1, EB2, EB3, EB4, die miteinander verrechnet werden, überlappen.

Handelt es sich bei dem Berechnungsschritt um ein Convolution- oder Pooling-Berechnungsschritt, so werden mehrere Elemente des Eingangsdatenblocks EB1, EB2, EB3, EB4 zu einem Datenelement des Ausgangsdatenblocks AB1, AB2, AB3, AB4 verarbeitet. Die Größe des Überlappungsbereichs kann in diesem Fall durch eine Berechnung des maximalen Abstands zwischen der Adresse eines Datenelements des Ausgangsdatenblocks AB1, AB2, AB3, AB4 und der Adresse eines für die Einzelberechnung zuerst zugegriffenen Datenelement der mehreren Datenelemente, die für die Einzelberechnung in dem Berechnungsschritt verwendet wird. Die diesbezügliche Berechnungsvorschrift basiert allgemein darauf, dass der Speicher in Zeilen und Spalten organisiert ist und ein Speicherbereich einen zusammenhängenden Adressbereich von aufeinander folgenden Adressen aufweist ist. Grundsätzlich wird ein Speicherbereich eines Eingangsdatenblocks EB1, EB2, EB3, EB4 ausgehend von der niedrigwertigsten Adresse zur höchstwertigen Adresse des Speicherbereichs bearbeitet.

Seien x und y die Adresskoordinaten des Datenelements des Eingangsdatenblocks EB1, EB2, EB3, EB4, wobei X der Spaltenadresse und y der Zeilenadresse entspricht. Es werden weiterhin $stride_x$ und $stride_y$ der Stride der Operation in x- und y-Richtung angenommen, $pad_x$ und $pad_y$ entsprechen dem Padding der Operation in x- und y-Richtung, ReLU die rectified-linear-unit-Funktion, sowie $input_x$, $input_y$ und $input_{ch}$ die Breite, Höhe und Anzahl der Kanäle der Eingangsdaten. Dann kann für alle Operationen vom Typ Convolution und Pooling, die das oben beschriebene Zugriffsmuster aufweisen, die Adresse des ersten benötigten Datenelements im Speicher nach folgender Formel berechnet werden

$$input\_element(x, y) = (ReLU(stride_y*y-pad_y)*input_x + ReLU(stride_x*x-pad_x))*input_{ch}$$

Wenn man mit output, , $output_y$ und $output_{ch}$ die Breite, Höhe und Anzahl der Kanäle der Ausgangsdaten bezeichnet, ergibt sich die Adresse des Outputelements im Speicher als

$$output\_element(x, y) = (y * output_x + x) * output_{ch}. \quad (2)$$

Die größtmögliche Überlappung max_overlap berechnet sich ohne Vorsammlung der Inputdaten dann als

$$max\_overlap = max (output\_element(x, y) - input\_element(x, y)) \text{ mit } 0 \leq x < output_x, 0 \leq y < output_y$$

Mit Vorsammlung erhöht er sich entsprechend um die entsprechende Anzahl an zwischengespeicherten Elementen.

Diese Berechnung wird für jedes Datenelement des Eingangsdatenblocks durchgeführt und das Maximum der Differenz der so ermittelten Werte bestimmt. Der resultierende Wert des Maximums entspricht der Größe des maximalen Überlappungsbereichs max_overlap, das den Speicherbereich darstellt, am Anfang des Speicherbereichs des Eingangsdatenblocks, mit dem das Ende des Ausgangsdatenblocks AB1, AB2, AB3, AB4 diesen überlappen darf.

Wurden für jeden Berechnungsschritt der maximale Überlappungsbereich ermittelt, so wird in Schritt S3 die Speicherplanung durchgeführt, beispielsweise basierend auf einem Optimierungsverfahren, das als Zielfunktion die gesamte benötige Größe des Arbeitsspeichers berücksichtigt. Insbesondere kann die Zielfunktion vorgeben, dass die gesamte benötige Größe des Arbeitsspeichers minimiert wird. Die Speicherplanung kann mit einem SMT Solver in an sich bekannter Weise durchgeführt werden.

In Schritt S4 wird basierend auf der erfolgten Speicherplanung eine Code-Generierung für die Hardwareumgebung 2 durchgeführt und dort implementiert.

**Patentansprüche**

1. Computer-implementiertes Verfahren zum Durchführen einer Speicherplanung für eine Code-Generierung zur Bestimmung eines Codes für die Berechnung eines neuronalen Netzes zum Einsatz in einer Hardwareumgebung (2), mit folgenden Schritten:

- Bereitstellen (S1) von aufeinanderfolgenden Berechnungsschritten des neuronalen Netzes, wobei für jeden Berechnungsschritt die Größe mindestens eines Eingangsdatenblocks (EB1, EB2, EB3, EB4) und mindestens eines Ausgangsdatenblocks (AB1, AB2, AB3, AB4) bestimmt ist,
- Ermitteln (S2) eines maximalen Überlappungsbereich zwischen einem Eingangsdatenblock (EB1, EB2, EB3, EB4) und einem Ausgangsdatenblock (AB1, AB2, AB3, AB4) für jeden Berechnungsschritt;
- Durchführen (S3) einer Speicherplanung für die Berechnungsschritte, wobei der Speicherbereich des jeweiligen Eingangsdatenblocks (EB1, EB2, EB3, EB4) und Ausgangsdatenblocks (AB1, AB2, AB3, AB4) im Arbeitsspeicher festgelegt wird, abhängig von dem maximalen Überlappungsbereich für jeden Berechnungsschritt.

2. Verfahren nach Anspruch 1, wobei das Durchführen der Speicherplanung das Anwenden eines Optimierungsverfahrens umfasst, bei der die Zielfunktion eine Minimierung des gesamten benötigten Arbeitsspeichers (M) berücksichtigt.

3. Verfahren nach Anspruch 1 oder 2, wobei der entsprechende Eingangsdatenblock (EB1, EB2, EB3, EB4) und der entsprechende Ausgangsdatenblock (AB1, AB2, AB3, AB4) jeweils einen Speicherbereich angeben oder diesem zugeordnet sind, der aufeinanderfolgend aufsteigende Adressen aufweist, wobei der Berechnungsschritt auf die Datenelemente des Eingangsdatenblocks (EB1, EB2, EB3, EB4) insbesondere in aufsteigenden Adressen zugreift.

4. Verfahren nach einem der Ansprüche 1 bis 3, wobei der maximale Überlappungsbereich dem Bereich entspricht, mit dem ein Ende (größte Adresse) des Speicherbereichs des entsprechenden Ausgangsdatenblocks (AB1, AB2, AB3, AB4) den Anfang (kleinste Adresse) des entsprechenden Speicherbereichs des Eingangsdatenblocks (EB1, EB2, EB3, EB4) überlappt, wobei insbesondere die Speicherbereiche mit im Wesentlichen aufsteigenden Adressen von einer Anfangsadresse des Speicherbereichs zu einer Endadresse des Speicherbereichs ausgelesen oder beschrieben werden.

5. Verfahren nach einem der Ansprüche 1 bis 4, wobei Berechnungsschritten, die elementweise Einzelberechnungen vorsehen, insbesondere Additionen, Multiplikationen und Subtraktionen von Elementen mit gleichem Index, eine vollständige Überlappung des Speicherbereichs für den Ausgangsdatenblock (AB1, AB2, AB3, AB4) mit dem Speicherbereich eines Abschnitts des Eingangsdatenblocks (EB1, EB2, EB3, EB4) oder eines der Eingangsdatenblöcke zugeordnet werden.

6. Verfahren nach einem der Ansprüche 1 bis 5, wobei Berechnungsschritten für eine Convolution-Schicht oder einer Pooling-Schicht eine maximale Überlappung max_overlap zugeordnet werden, die sich aus folgender Berechnungsvorschrift ergeben:

$$input\_element(x, y) = (ReLU(stride_y*y-pad_y)*input_x + ReLU(stride_x*x-pad_x))*input_{ch}$$

$$output\_element(x, y) = (y * output_x + x) * output_{ch}$$

$$max\_overlap = max \ (output\_element(x, y) - input\_element(x, y))$$

$$\text{mit } 0 \leq x < output_x, \ 0 \leq y < output_y$$

wobei x und y Adresskoordinaten des Datenelement des Eingangsdatenblocks entsprechen, wobei x der Spaltenadresse und y der Zeilenadresse entspricht, wobei $stride_x$ und $stride_y$ den Strides der Einzelberechnung in x- und y-Richtung, $pad_x$ und $pad_y$ den Paddings der Operation in x- und y-Richtung, ReLU die rectified-linear-unit-Funktion, und $input_x$, $input_y$ und $input_{ch}$ die Breite, Höhe und Anzahl der Kanäle der Eingangsdaten, und $output_x$, $output_y$ und $output_{ch}$ die Breite, Höhe und Anzahl der Kanäle der Ausgangsdaten entsprechen.

7. Verfahren nach einem der Ansprüche 1 bis 6, wobei eine Code-Generierung für die Hardwareumgebung (2) basierend auf dem Ergebnis der Speicherplanung durchgeführt und dort implementiert wird.

8. Vorrichtung zur Durchführung eines der Verfahren nach einem der Ansprüche 1 bis 7.

9. Computerprogrammprodukt, umfassend Befehle, die bei der Ausführung des Programms durch mindestens eine Datenverarbeitungseinrichtung diese veranlassen, die Schritte des Verfahrens nach einem der Ansprüche 1 bis 7 auszuführen.

10. Maschinenlesbares Speichermedium, umfassend Befehle, die bei der Ausführung durch mindestens eine Datenverarbeitungseinrichtung diese veranlassen, die Schritte des Verfahrens nach einem der Ansprüche 1 bis 7 auszuführen.

**Geänderte Patentansprüche gemäss Regel 137(2) EPÜ.**

1. Computer-implementiertes Verfahren zum Durchführen einer Speicherplanung für eine Code-Generierung zur Bestimmung eines Codes für die Berechnung eines neuronalen Netzes zum Einsatz in einer Hardwareumgebung (2), mit folgenden Schritten:

   - Bereitstellen (S1) von aufeinanderfolgenden Berechnungsschritten des neuronalen Netzes, wobei für jeden Berechnungsschritt die Größe mindestens eines Eingangsdatenblocks (EB1, EB2, EB3, EB4) und mindestens eines Ausgangsdatenblocks (AB1, AB2, AB3, AB4) bestimmt ist,Ermitteln (S2) eines maximalen Überlappungsbereich zwischen einem Eingangsdatenblock (EB1, EB2, EB3, EB4) und einem Ausgangsdatenblock (AB1, AB2, AB3, AB4) für jeden Berechnungsschritt;

   o **Gekennzeichnet durch** die Zuordnung einer maximalen Überlappung max_overlap zu Berechnungsschritten für eine Convolution-Schicht oder einer Pooling-Schicht, wobei max_overlap sich aus folgender Berechnungsvorschrift ergibt:

   $input\_element(x, y) = (ReLU(stride_y*y-pad_y)*input_x + ReLU(stride_x*x-pad_y))*input_{ch}$ $output\_element(x, y) = (y * output_x + x) * output_{ch}$ $max\_overlap = max (output\_element(x, y) -input\_element(x, y))$

   mit $0{\leq}x{<}output_x$, $0{\leq}y{<}output_y$
   wobei x und y Adresskoordinaten des Datenelement des Eingangsdatenblocks entsprechen, wobei x der Spaltenadresse und y der Zeilenadresse entspricht, wobei $stride_x$ und $stride_y$ den Strides der Einzelberechnung in x- und y-Richtung, $pad_x$ und $pad_y$ den Paddings der Operation in x- und y-Richtung, ReLU die rectified-linear-unit-Funktion, und $input_x$ , $input_y$ und $input_{ch}$ die Breite, Höhe und Anzahl der Kanäle der Eingangsdaten, und output, , $output_y$ und $output_{ch}$ die Breite, Höhe und Anzahl der Kanäle der Ausgangsdaten entsprechen;

   - Durchführen (S3) einer Speicherplanung für die Berechnungsschritte, wobei der Speicherbereich des jeweiligen Eingangsdatenblocks (EB1, EB2, EB3, EB4) und Ausgangsdatenblocks (AB1, AB2, AB3, AB4) im Arbeitsspeicher festgelegt wird, abhängig von dem maximalen Überlappungsbereich für jeden Berechnungsschritt.

2. Verfahren nach Anspruch 1, wobei das Durchführen der Speicherplanung das Anwenden eines Optimierungsverfahrens umfasst, bei der die Zielfunktion eine Minimierung des gesamten benötigten Arbeitsspeichers (M) berücksichtigt.

3. Verfahren nach Anspruch 1 oder 2, wobei der entsprechende Eingangsdatenblock (EB1, EB2, EB3, EB4) und der entsprechende Ausgangsdatenblock (AB1, AB2, AB3, AB4) jeweils einen Speicherbereich angeben oder diesem zugeordnet sind, der aufeinanderfolgend aufsteigende Adressen aufweist, wobei der Berechnungsschritt auf die Datenelemente des Eingangsdatenblocks (EB1, EB2, EB3, EB4) insbesondere in aufsteigenden Adressen zugreift.

4. Verfahren nach einem der Ansprüche 1 bis 3, wobei der maximale Überlappungsbereich dem Bereich entspricht, mit dem ein Ende (größte Adresse) des Speicherbereichs des entsprechenden Ausgangsdatenblocks (AB1, AB2, AB3, AB4) den Anfang (kleinste Adresse) des entsprechenden Speicherbereichs des Eingangsdatenblocks (EB1, EB2, EB3, EB4) überlappt, wobei insbesondere die Speicherbereiche mit im Wesentlichen aufsteigenden Adressen von einer Anfangsadresse des Speicherbereichs zu einer Endadresse des Speicherbereichs ausgelesen oder beschrieben werden.

5. Verfahren nach einem der Ansprüche 1 bis 4, wobei Berechnungsschritten, die elementweise Einzelberechnungen vorsehen, insbesondere Additionen, Multiplikationen und Subtraktionen von Elementen mit gleichem Index, eine vollständige Überlappung des Speicherbereichs für den Ausgangsdatenblock (AB1, AB2, AB3, AB4) mit dem Speicherbereich eines Abschnitts des Eingangsdatenblocks (EB1, EB2, EB3, EB4) oder eines der Eingangsdatenblöcke zugeordnet werden.

6. Verfahren nach einem der Ansprüche 1 bis 5, wobei eine Code-Generierung für die Hardwareumgebung (2) basierend auf dem Ergebnis der Speicherplanung durchgeführt und dort implementiert wird.

7. Vorrichtung zur Durchführung eines der Verfahren nach einem der Ansprüche 1 bis 6.

8. Computerprogrammprodukt, umfassend Befehle, die bei der Ausführung des Programms durch mindestens eine Datenverarbeitungseinrichtung diese veranlassen, die Schritte des Verfahrens nach einem der Ansprüche 1 bis 6 auszuführen.

9. Maschinenlesbares Speichermedium, umfassend Befehle, die bei der Ausführung durch mindestens eine Datenverarbeitungseinrichtung diese veranlassen, die Schritte des Verfahrens nach einem der Ansprüche 1 bis 6 auszuführen.

Fig. 1

EP 4 730 106 A1

1

3 → 2

**Fig. 2**

Start

↓

S1

↓

S2

↓

S3

↓

S4

↓

Stop

**Fig. 3**

Fig. 4

EP 4 730 106 A1

Europäisches Patentamt
European Patent Office
Office européen des brevets

# EUROPÄISCHER RECHERCHENBERICHT

Nummer der Anmeldung

EP 24 20 7521

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | JI LIN ET AL: "Tiny Machine Learning: Progress and Futures", ARXIV.ORG, CORNELL UNIVERSITY LIBRARY, 201 OLIN LIBRARY CORNELL UNIVERSITY ITHACA, NY 14853, 28. März 2024 (2024-03-28), XP091712943, DOI: 10.1109/MCAS.2023.3302182 | 1-5,7-10 | INV. G06F8/41 G06N3/04 G06N3/10 |
| A | * 1. Absatz von Abschnitt I * * Abschnitt II.A.a * * Seite 6, linke Spalte, 1. Absatz * * Seite 9, rechte, Spalte, 2. Absatz * * Abbildung 10 * * Abbildung 12(a) * * Tabellen I, II * ----- | 6 | |
| A | LIU YU-YUAN ET AL: "TinyTS: Memory-Efficient TinyML Model Compiler Framework on Microcontrollers", 2024 IEEE INTERNATIONAL SYMPOSIUM ON HIGH-PERFORMANCE COMPUTER ARCHITECTURE (HPCA), IEEE, 2. März 2024 (2024-03-02), Seiten 848-860, XP034578881, DOI: 10.1109/HPCA57654.2024.00070 [gefunden am 2024-04-02] * 1. Absatz von Abschnitt IV * * Abschnitt V.B * ----- | 1,8-10 | |

| RECHERCHIERTE SACHGEBIETE (IPC) |
|---|
| G06F G06N |

Der vorliegende Recherchenbericht wurde für alle Patentansprüche erstellt

| Recherchenort | Abschlußdatum der Recherche | Prüfer |
|---|---|---|
| München | 21. März 2025 | Kamps, Stefan |